# EUROPÄISCHE PATENTSCHRIFT

(11) **EP 1 204 609 B1**
(45) Veröffentlichungstag und Bekanntmachung des Hinweises auf die Patenterteilung: **29.01.2003**
(21) Anmeldenummer: 00918823.6
(22) Anmeldetag: 22.03.2000
(51) Int. Cl.: C03B 23/047

(54) **VERFAHREN FÜR DIE HERSTELLUNG EINES ZYLINDERFÖRMIGEN BAUTEILS AUS QUARZGLAS UND DAFÜR GEEIGNETE VORRICHTUNG**
METHOD FOR PRODUCING A CYLINDRICAL COMPONENT COMPRISED OF SILICA GLASS AND A DEVICE SUITED THEREFOR
PROCEDE DE PRODUCTION D'UN COMPOSANT CYLINDRIQUE EN VERRE DE QUARZ ET DISPOSITIF CORRESPONDANT

(30) Priorität: 07.04.1999 DE 19915509
(43) Veröffentlichungstag der Anmeldung: 15.05.2002
(73) Patentinhaber: Heraeus Tenevo AG, 63450 Hanau (DE)
(72) Erfinder: SCHMITT, Clemens, D-63825 Blankenbach (DE); BRÄUER, Karsten, D-63486 Bruchköbel (DE); CHRISTIANSEN, Uwe, D-63571 Gelnhausen (DE); KÖPPLER, Rainer, D-63500 Seligenstadt (DE); FABIAN, Heinz, D-63762 Grossostheim (DE)
(74) Vertreter: Staudt, Armin, Dipl.-Ing.
(86) Internationale Anmeldenummer: EP0002506
(87) Internationale Veröffentlichungsnummer: WO00061509

(56) Entgegenhaltungen:
- EP-A- 0 578 244
- EP-A- 0 846 665
- US-A- 2 155 131
- US-A- 2 306 995
- US-A- 3 401 028

## Beschreibung

Die Erfindung betrifft ein Verfahren für die Herstellung eines zylinderförmigen Bauteils aus Quarzglas durch Abziehen eines Zylinders aus einer erweichten Quarzglasmasse in vorgegebener Abzugsrichtung entlang einer Ziehachse mittels eines am Zylinder angreifenden Abzuges.

Weiterhin betrifft die Erfindung eine Vorrichtung für die Herstellung eines zylinderförmigen Bauteils aus Quarzglas durch Ziehen eines Zylinders aus einer erweichten Quarzglasmasse, mit einer Zuführvorrichtung, einer Heizzone und einem Abzug, wobei mittels der Zuführvorrichtung ein Quarzglas-Rohmaterial der Heizzone zugeführt, das Quarzglas-Rohmaterial in der Heizzone unter Bildung der Quarzglasmasse erweicht, und aus der erweichten Quarzglasmasse mittels des Abzuges der Zylinder entlang einer Ziehachse und in einer vorgegebenen Abzugsrichtung mit geregelter Ziehgeschwindigkeit gezogen wird.

Bei einem derartigen zylinderförmigen Bauteil kann es sich zum Beispiel um ein Rohr, eine Kapillare oder um einen Stab handeln. Das Bauteil wird aus dem abgezogenen Zylinder nach weiteren Verfahrensschritten, wie beispielsweise durch Ablängen, erhalten. Die Quarzglasmasse kann in einem Tiegel erweicht werden oder als Formkörper, beispielsweise als Zylinder, der der Heizzone zugeführt und darin zonenweise erweicht wird, bereitgestellt werden.

Verfahren und Vorrichtung der eingangs genannten Gattung sind aus der EP-A2-598 349 bekannt. Darin wird ein Verfahren zur Herstellung einer großvolumigen Quarzglas-Vorform für optische Fasern nach der sogenannten Stab-in-Rohr-Technik beschrieben. In einem Verfahrensschritt zur Herstellung der Vorform wird ein Quarzglas-Hohlzylinder zu einem Rohr aus Quarzglas mit vorgegebenen Abmessungen elongiert. Hierzu wird der Quarzglas-Hohlzylinder in vertikaler Ausrichtung kontinuierlich einem elektrisch beheizten Ofen zugeführt und darin vom unteren Ende beginnend zonenweise erweicht. Aus der erweichten Zone wird kontinuierlich das Quarzglas-Rohr nach unten abgezogen, wobei die Ziehachse mit den Längsachsen von Hohlzylinder und Rohr übereinstimmt. Der zum Abziehen des Rohres eingesetzte Abzug besteht aus einem sich gegenüberliegend an der Rohrmantelfläche anliegenden Rollenpaar mit zwei gegenläufig rotierenden Rollen.

Aus VDI-Zeitschrift Bd. 85, Nr. 49/50, Seite 958-959 ist ein Verfahren zur Herstellung von Quarzglas-Rohr für Lampen beschrieben, bei dem das Rohr über eine Auslaufdüse aus einem Tiegel mit erweichter Quarzglasmasse vertikal nach unten abgezogen wird. Bei dem dafür eingesetzten Abzug sind parallel zum abzuziehenden Rohr verlaufende und gegenläufig rotierende Ziehketten vorgesehen. Die Ziehketten sind mit federnd geführten Ziehbacken bestückt, die an der Rohrmantelfläche angreifen und so das Rohr nach unten abziehen.

Nach den genannten Verfahren lassen sich sowohl Rohre als auch Stäbe herstellen. Durch unzureichende Justierung des Abzugs oder durch unvorhersehbare Änderungen während des Ziehvorganges, zum Beispiel durch Temperaturschwankungen im Bereich der erweichten Quarzglasmasse, kann die Ziehachse in Bezug auf die Vertikale verkippen, was zu einer Krümmung der abgezogenen Rohre oder Stäbe führt, oder es kann auch zu Abweichungen von der idealen Zylindergeometrie kommen, beispielsweise zu Ovalitäten oder ungleichmäßigen Wandstärkeverteilungen bei Hohlzylindern. Darüberhinaus wird die Mantelfläche über die gesamte Länge des abgezogenen Zylinders durch den Kontakt mit dem Rollenpaar oder der Ziehkette mechanisch belastet. Daraus resultierende Beschädigungen können sich während des Abziehens oder bei späteren Weiterbearbeitungsschritten ungünstig auswirken.

Der Erfindung liegt daher die Aufgabe zugrunde, ein Verfahren anzugeben, bei dem eine Krümmung des abgezogenen Zylinders und andere Abweichungen von der idealen Zylindergeometrie möglichst vermieden werden, und eine dafür geeignete Vorrichtung bereitzustellen. Darüberhinaus liegt der Erfindung die Aufgabe zugrunde, Berührungen der Zylindermantelfläche des abgezogenen Zylinders möglichst zu vermeiden.

Hinsichtlich des Verfahrens wird diese Aufgabe ausgehend von dem eingangs beschriebenen Verfahren erfindungsgemäß dadurch gelöst, daß der Abzug wenigstens drei, entlang der Ziehachse hintereinander angeordnete und in Abzugsrichtung und in Gegenrichtung unabhängig voneinander bewegbare Führungselemente umfaßt, von denen mindestens zwei einen Greifabstand voneinander haltende Führungselemente am Zylinder gleichzeitig reibschlüssig angreifend mit gleicher Ziehgeschwindigkeit in Abzugsrichtung bewegt werden.

Die am Zylinder angreifenden Führungselemente bewegen sich synchron mit dem abzuziehenden Zylinder mit Ziehgeschwindigkeit in Abzugsrichtung. Diese werden im folgenden auch als "aktive Führungselemente" bezeichnet. Mindestens zwei der aktiven Führungselemente greifen reibschlüssig an einem lokal begrenzten und definierten Bereich der Mantelfläche des Zylinders an. Der reibschlüssige Angriff jedes der Führungselemente am Zylinder wird üblicherweise dadurch erreicht, daß das Führungselement den Zylinder so fest umspannt, daß ein Abgleiten des Führungselementes oder ein Durchrutschen des Zylinders verhindert wird. Benachbarte aktive Führungselemente, die gleichzeitig am Zylinder angreifen, halten dabei einen Abstand voneinander. Dieser Abstand, der einem Längenabschnitt des Zylinders entspricht, wird im folgenden als "Greifabstand" bezeichnet. Über die Länge des Greifabstandes können Berührungen der Zylindermantelfläche vermieden werden.

Während des Ziehvorganges greifen mindestens zwei der Führungselemente am Zylinder gleichzeitig an. Die Hintereinanderanordnung mehrerer aktiver Führungselemente entlang der Ziehachse gewährleistet eine starre Führung des Zylinders in einer vorgegeben Achse, der Ziehachse. Und zwar unabhängig von Änderungen der Geometrie oder Lage der erweichten Quarzglasmasse oder Schwankungen der Ziehparameter. Ein Verkippen des Zylinders aus der vorgegebenen Ziehachse und damit einhergehende Abweichungen von der gewünschten Zylindergeometrie werden so vermieden.

Jedes oder mehrere der Führungselemente sind entlang der Ziehachse sowohl in Abzugsrichtung als auch - unabhängig voneinander - in Gegenrichtung dazu bewegbar. Während seiner Bewegungsphase in Gegenrichtung, kann das jeweilige Führungselement am Zylinder nicht angreifen. Führungselemente in dieser Bewegungsphase werden im folgenden auch als "passive Führungselemente" bezeichnet. Um eine starre Führung des Zylinders zu gewährleisten, sind auch in dieser Bewegungsphase stets mindestens zwei andere, aktive Führungselemente erforderlich, die mit dem Zylinder mit Ziehgeschwindigkeit synchron in Abzugsrichtung bewegt werden. Das in Gegenrichtung bewegte, passive Führungselement (oder die passiven Führungselemente) kann an seinen Ausgangspunkt oder an einen anderen Punkt zurückgefahren werden, wo es dann wieder zum Abziehen des Zylinders in Abzugsrichtung bereitsteht. Diese Verfahrensweise, die ein kontinuierliches Abziehen langer Zylinder bei geringer Bauhöhe oder -länge der dafür benötigten Zieheinrichtung ermöglicht, wird im folgenden als "reziprokes Abziehen" bezeichnet.

Üblicherweise ist die Ziehachse vertikal orientiert, wobei im einfachsten Fall der Zylinder nach unten abgezogen wird. Die Ziehachse kann aber auch horizontal verlaufen oder zur Vertikalen geneigt sein, wenn beim Ziehen die Verformungswirkung der Schwerkraft durch Rotation des Zylinder um seine Längsachse ausgeglichen wird. Soweit im folgenden der Einfachheit halber die Erfindung anhand einer vertikalen orientierten Ziehachse mit einem Abzug nach unten erläutert wird, so soll dies lediglich das Verständnis der Erfindung erleichtern, ohne daß andere Orientierungen von Ziehachse und Abzugsrichtung dadurch ausgeschlossen werden sollen, sofern dies nicht ausdrücklich erklärt wird.

Im Hinblick auf eine möglichst lange berührungsfreie Teillänge des Zylinders hat es sich als günstig erwiesen, daß der Abstand zwischen den am Zylinder angreifenden Führungselementen mindestens 1 m beträgt. Bei einem großen Abstand wird auch die Führung des Zylinders durch die aktiven Führungselemente, die eine starre Führung gewährleisten, genauer.

Beim reziproken Abziehen ist es besonders vorteilhaft, wenn die Greifabstände auf gleiche Länge oder auf ganzzahlige Vielfache einer vorgegebenen Mindestlänge eingestellt werden. Bei dieser Verfahrensvariante gelingt es, die Anzahl der Kontaktstellen von Führungselementen und Zylinder gering zu halten, indem die Kontaktstelle eines nachfolgenden aktiven Führungselementes möglichst genau an die Kontaktstelle eines oder mehrerer vorangegangener Führungselemente verlegt wird. Bei gleichen Greifabständen zwischen benachbarten Führungselementen entspricht der kontaktfreie Zylinderabschnitt zwischen benachbarten Kontaktstellen dem Greifabstand, andernfalls der vorgegebenen Mindestlänge.

Besonders bewährt hat sich eine Verfahrensweise, bei der die Bewegung der Führungselemente in Gegenrichtung mit mindestens zweifacher Ziehgeschwindigkeit erfolgt. Die Zeitspanne, innerhalb der ein Führungselement am Zylinder nicht angreifen kann, weil es in Gegenrichtung zur Abzugsrichtung verfahren wird, kann umso kürzer gehalten werden, je schneller die Geschwindigkeit bei der Bewegungsphase in Gegenrichtung eingestellt wird. Eine möglichst kurze Zeitspanne wirkt sich positiv auf die Stabilität der Zylinderführung und auf die Prozeßstabilität insgesamt aus.

Es wird eine Verfahrensweise bevorzugt, bei der den Führungselementen jeweils ein Arbeitsbereich zugeordnet ist, der einem individuellen Längenabschnitt entlang der Ziehachse entspricht, wobei die Führungselemente innerhalb ihres jeweiligen Arbeitsbereiches in Abzugsrichtung und in der Gegenrichtung dazu bewegt werden. Den Führungselementen ist jeweils ein individueller Längenabschnitt entlang der Ziehachse zugeordnet, innerhalb dem sie zum Abziehen des Zylinders unabhängig voneinander hin- und herbewegt werden, wobei sie bei der Bewegungsphase, während der sie entgegengesetzt zur Abzugsrichtung bewegt werden, am Zylinder nicht angreifen. Die Arbeitsbereiche sind üblicherweise hintereinander angeordnet, sie können sich aber auch überschneiden.

Als günstig hat es sich erwiesen, wenn die Arbeitsbereiche um eine Wegstrecke kürzer sind als der Greifabstand, wobei das Verhältnis von Wegstrecke zu dem jeweiligen Arbeitsbereich mindestens so groß ist wie das Verhältnis von Ziehgeschwindigkeit und der Geschwindigkeit bei der Bewegung in Gegenrichtung. Diese Verfahrensweise, die erst bei einer Bewegung der Führungselemente in Gegenrichtung mit mindestens zweifacher Ziehgeschwindigkeit als sinnvoll anzusehen ist, wirkt sich insbesondere dann vorteilhaft aus, wenn jedes der Führungselemente innerhalb seines vorgegebenen Arbeitsbereiches stets zwischen einem vorgegebenen, konstanten Anfangspunkt und einem vorgegebenen, konstanten Endpunkt hin- und herbewegt wird, und wenn gleichzeitig konstante Greifabstände (Abstand der Kontaktstellen) über die Länge des Zylinders realisiert werden sollen. Hierzu ist es erforderlich, daß jedes der Führungselemente beginnend von seinem Anfangspunkt nur über eine erste Teilstrecke des Greifabstandes synchron mit dem Zylinder in Abzugsrichtung bewegt wird, da für die "Zurückbewegungsphase" beim Zurückfahren des Abzugselementes zum Anfangspunkt und für eine "Haltephase" zum erneuten Kontaktieren von Führungselement und Zylinder eine endliche Zeitspanne benötigt wird, innerhalb der der Zylinder jedoch um eine weitere, zweite Teilstrecke abgezogen wird. Diese zweite Teilstrecke entspricht dem als "Wegstrecke" bezeichneten Längenabschnitt. Es ist günstig, wenn die "Wegstrecke" kurz gehalten wird, denn während der "Zurückbewegungs- und Haltephase" greift mindestens ein passives Führungselement am Zylinder nicht an, so daß die Zylinderführung durch die übrigen, aktiven Führungselemente gewährleistet sein muß. Eine kurze Wegstrecke wird durch eine möglichst kurze "Zurückbewegungsphase", also durch eine möglichst hohe Geschwindigkeit bei der Bewegung in Gegenrichtung, und durch eine möglichst kurze "Haltephase" erreicht. Diese Verfahrensweise, die eine kontinuierliche Wiederholung der gleichen Bewegungsabläufe bei gleichzeitig möglichst langen Zeitspannen mit aktiven Führungselementen und kurzen Zeitspannen mit passiven Führungselementen ermöglicht, wirkt sich insbesondere auf die Prozeßstabilität positiv aus.

Als besonders günstig hat es sich erwiesen, wenn die Führungselemente jeweils axialsymmetrisch zur Ziehachse an der Zylindermantelfläche des Zylinders angreifen. Dadurch wird die exakte Führung des Zylinders in der Ziehachse erleichtert.

Vorteilhafterweise rotieren erweichte Quarzglasmasse, Zylinder und die am Zylinder angreifenden Führungselemente um die Ziehachse mit gleicher Rotationsgeschwindigkeit. Ein eventueller Versatz in der Abzugsrichtung zur Ziehachse, Ovalitäten, ungleichmäßige Wandstärkeverteilungen, Biegungen oder Temperaturschwankungen im Bereich von Zylinder oder erweichter Quarzglasmasse können so ausgeglichen werden.

Besonders bewährt hat sich der Einsatz eines Abzug mit mindestens drei Führungselementen. Diese ermöglichen ein reziprokes Abziehen mit geringem apparativen Aufwand und verhältnismäßig kleiner Bauhöhe des dafür eingesetzten Abzugs. Dabei sind jeweils mindestens zwei der Führungselemente in Kontakt mit dem Zylinder, auch während der Zeitspannen, in denen eines der Führungselemente an eine Ausgangsposition zurückgefahren wird oder auf einen Einsatz wartet.

Es wird eine Verfahrensvariante des erfindungsgemäßen Verfahrens bevorzugt, bei der der Zylinder durch Elongieren eines zylinderförmigen Vorproduktes aus Quarzglas gezogen wird, wobei das Vorprodukt kontinuierlich einer Heizzone zugeführt, darin unter Bildung der erweichten Quarzglasmasse zonenweise erweicht und aus dem erweichten Bereich der Zylinder gezogen wird. Bei dem Vorprodukt kann es sich beispielsweise um einen Hohlzylinder oder um einen Stab handeln. Bei dieser Verfahrensweise läßt sich die Querschnittsgeometrie des Zylinders durch Regeln der Zuführgeschwindigkeit des Vorproduktes und der Abziehgeschwindigkeit des Zylinders besonders genau einhalten. Im Falle eines hohlzylindrischen Vorproduktes kann an der Bohrung ein Unterdruck oder ein Überdruck angelegt werden.

Hinsichtlich der Vorrichtung für die Herstellung eines Zylinderförmigen Bauteils aus Quarzglas durch Ziehen eines Zylinders aus einer erweichten Quarzglasmasse, wird die oben angegebene Aufgabe ausgehend von einer Vorrichtung gemäß der eingangs genannten Gattung erfindungsgemäß dadurch gelöst, daß der Abzug wenigstens drei, entlang der Ziehachse hintereinander angeordnete Führungselemente umfaßt, die in Abzugsrichtung und in der Gegenrichtung dazu unabhängig voneinander bewegbar sind.

Dadurch, daß die am Zylinder angreifenden Führungselemente mit Ziehgeschwindigkeit in Abzugsrichtung verfahrbar sind, können sie synchron mit dem abzuziehenden Zylinder bewegt werden, so daß jedes Führungselement nur an einem lokal begrenzten und definierten Bereich der Mantelfläche des Zylinders angreift. Berührungen der Zylindermantelfläche im Bereich zwischen zwei benachbarten Führungselementen können so vermieden werden.

Die Anordnung mehrerer am Zylinder angreifender Führungselemente hintereinander gewährleistet eine starre Führung des Zylinders in einer vorgegeben Achse, der Ziehachse. Ein Verkippen des Zylinders aus der vorgegebenen Ziehachse wir so vermieden.

Die Führung des Zylinders durch die Führungselemente ist umso genauer, je größer der Abstand zwischen denjenigen Führungselementen ist, die eine starre Führung gewährleisten. Als günstig hat es sich erwiesen, wenn der Abstand zwischen aktiven Führungselementen mindestens 1 m beträgt.

Dadurch, daß die Führungselemente auch in Gegenrichtung zur Abzugsrichtung unabhängig voneinander bewegbar sind, wird ein "reziprokes Abziehen" ermöglicht, wie es weiter oben beschrieben ist.

Bei einer bevorzugten Ausführungsform der erfindungsgemäßen Vorrichtung ist den Führungselementen jeweils ein Arbeitsbereich zugeordnet, der einem individuellen Längenabschnitt entlang der Ziehachse entspricht, wobei die Führungselemente innerhalb ihres jeweiligen Arbeitsbereiches in Abzugsrichtung und in der Gegenrichtung dazu bewegbar sind. Diese Ausführungsform ermöglicht ein kontinuierliches Ziehen langer Zylinder bei gleichzeitig relativ geringer Bauhöhe. Den Führungselementen ist jeweils ein individueller Längenabschnitt entlang der Ziehachse zugeordnet, innerhalb von dem sie zum Abziehen des Zylinders unabhängig voneinander hin- und herbewegt werden, wobei sie bei einer Bewegung entgegengesetzt zur Abzugsrichtung mit dem Zylinder nicht in Kontakt sind. Die einzelnen Arbeitsbereiche und der Bewegungsablauf der Führungselemente können so aufeinander abgestimmt werden, daß die Anzahl der Kontaktstellen von Führungselementen und Zylinder möglichst gering ist, indem die Kontaktstelle eines nachfolgenden Führungselementes möglichst genau an die Kontaktstelle eines oder mehrerer vorangegangener Führungselemente verlegt wird. Diese Verfahrensweise, bei der die Führungselemente voneinander einen konstanten "Greifabstand" einhalten, ist oben anhand des erfindungsgemäßen Verfahrens näher erläutert.

Als besonders günstig hat es sich erwiesen, wenn die Führungselemente jeweils axialsymmetrisch zur Ziehachse an der Zylindermantelfläche des zu ziehenden Zylinders angreifen. Dadurch ist es möglich, die Führungselemente so auszubilden, daß sie den Zylinder jeweils axialsymmetrisch zur Ziehachse umspannen. Dadurch wird die exakte Führung des Zylinders in der Ziehachse erleichtert. In einer bevorzugten Ausführungsform der erfindungsgemäßen Vorrichtung wird dies dadurch erreicht, daß die Führungselemente mit mindestens drei, um den Umfang des zu ziehenden Zylinders gleichmäßig verteilten Spannbacken versehen sind.

Vorteilhafterweise ist eine Rotationseinrichtung vorgesehen, mittels der die erweichte Quarzglasmasse, der Zylinder und die Führungselemente um die Ziehachse mit jeweils gleicher Rotationsgeschwindigkeit rotierbar sind. Durch eine Rotation werden von einer axialen Symmetrie abweichende Massen- oder Temperaturverteilungen oder ein eventueller Versatz der Abzugsrichtung zur Ziehachse ausgeglichen.

Besonders bewährt hat sich ein Abzug, der mindestens drei Führungselemente aufweist. Bei geringem apparativen Aufwand und kleiner Bauhöhe wird so ein reziprokes Abziehen des Zylinders ermöglicht, wie es anhand des Verfahrens weiter oben näher beschrieben ist.

Bei einer alternativen und gleichermaßen bevorzugten Ausführungsform der erfindungsgemäßen Vorrichtung weist der Abzug vier Führungselemente auf, die paarweise in Abzugsrichtung und in der Gegenrichtung dazu bewegbar sind. Mittels dieser Vorrichtungsvariante ist ein Abzugsverfahren durchführbar, bei denen die beiden Führungselementen-Paare wechselweise aktiv zum Abziehen des Zylinders beitragen, während das jeweils andere Paar in Gegenrichtung - beispielsweise an seine Ausgangsstelle - zurückbewegt wird. Darüberhinaus ermöglicht diese Ausführungsform ein Abzugsverfahren, bei dem der Längenabschnitt zwischen zwei aktiven Führungselementen stets mindestens dem doppelten Arbeitsabstand entspricht, indem die Führungselemente in der Reihenfolge ihrer Anordnung abwechselnd dem einen oder dem anderen Führungselementen-Paar zugeordnet werden.

Insbesondere im Hinblick auf eine exakte Führung des Zylinders durch die Führungselemente hat sich ein Abzug als günstig erwiesen, der mindestens ein parallel zur Ziehachse verlaufende, gemeinsame Führungsschiene für die Führungselemente aufweist. Au der gemeinsamen Führungsschiene können die Führungselemente beispielsweise n Form von Schlitten verschiebbar gelagert sein.

Vorteilhafterweise ist jedes der Führungselemente mit einem eigenen Antrieb versehen, wobei die Antriebe untereinander synchronisierbar sind. Dadurch, daß jedes Führungselement mit einem eigenen Antrieb versehen ist, kann der Bewegungsverlauf für jedes Führungselement unabhängig von anderen Führungselementen eingestellt werden. Dies vereinfacht insbesondere die Regelung für die Hin- und Herbewegung beim reziproken Abziehen. Dadurch, daß die einzelnen Antriebe untereinander synchronisierbar sind, wird gewährleistet, daß aktive Führungselemente mit gleicher Ziehgeschwindigkeit bewegt werden.

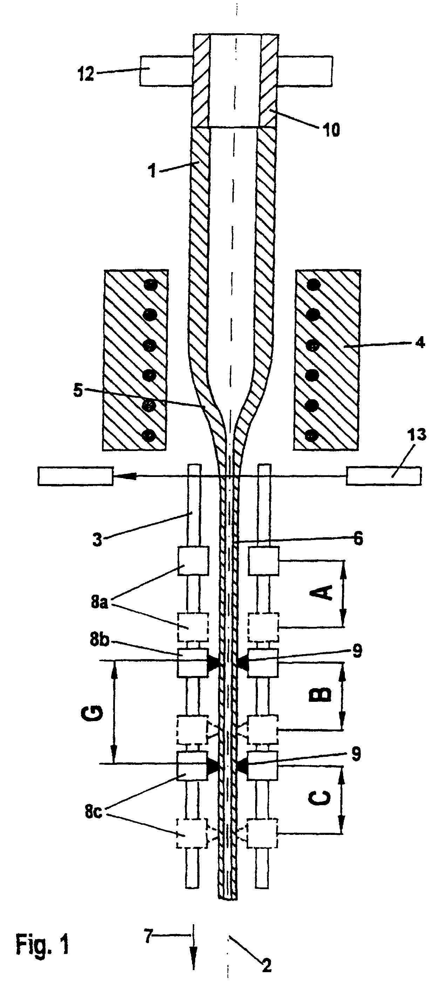

Nachfolgend wird die Erfindung anhand eines Ausführungsbeispieles und einer Zeichnung näher erläutert. In der Zeichnung zeigt
- **Figur 1**: ein Verfahren zur Herstellung eines Rohres durch Elongieren eines Zylinders und eine dafür geeignete Vorrichtung gemäß der vorliegenden Erfindung in schematischer Darstellung.

In **Figur 1** ist die Bezugsziffer 1 einem Quarzglas-Hohlzylinder zugeordnet, der mit dem unteren Ende beginnend kontinuierlich und mit geregelter Zuführgeschwindigkeit einem vertikal orientierten Ringofen 4 zugeführt und darin auf Erweichungstemperatur erhitzt wird. Aus dem erweichten Bereich, der sich in Form einer sogenannten Ziehzwiebel 5 ausbildet, wird kontinuierlich und mit geregelter Abzugsgeschwindigkeit ein Rohr 6 abgezogen; die Ziehrichtung wird durch den Richtungspfeil 7 angezeigt. Die Längsachsen von Zylinder 1 und Rohr 6 verlaufen dabei in der Ziehachse 8.

Der Abzug umfaßt zwei parallel zur Ziehachse 6 angeordnete Laufschienen 3, an denen drei Abzugsschlitten 8a, 8b, 8c verfahrbar sind. Jeder der Abzugsschlitten 8a, 8b, 8c ist mit einem Spannfutter 9 versehen, von dem in Figur 1 die Spannbacken zu erkennen sind. Jedes Spannfutter 9 umfaßt drei Spannbacken, die um den Umfang des Rohres 6 gleichmäßig verteilt sind und die durch elektrische Ansteuerung geöffnet und geschlossen werden können. Weiterhin ist jeder der Abzugsschlitten 8a, 8b, 8c mit einem eigenen Antrieb (in der Figur 1 nicht dargestellt) versehen. Im geöffneten Zustand sind die Abzugsschlitten 8a, 8b, 8c unabhängig voneinander - und von einer gemeinsamen Regelung vorgegeben - in Ziehrichtung 7 und in der Gegenrichtung dazu entlang den Laufschienen 3 verfahrbar. Im geschlossenen Zustand greifen die Spannfutter 9 an der Mantelfläche des Rohres 6 gerade so fest an, daß eine reibschlüssige Verbindung entsteht, die ein Abziehen des Rohres 6 in Ziehrichtung 7 erlaubt, ohne daß die Spannbacken an der Rohr-Mantelfläche abrutschen.

Zur zentrischen Halterung des Hohlzylinders 1 wird an sein oberes Ende koaxial ein Dummy-Zylinder 10 angesetzt, der axial in der Ziehachse 2 von einer Haltevorrichtung 12 umspannt wird.

In einer alternativen, in der Figur nicht dargestellten, Ausführungsform der Vorrichtung wird eine koaxiale Anordnung des Hohlzylinders 1 durch Selbstzentrierung gewährleistet. Diese wird dadurch erreicht, daß an das obere Ende des Hohlzylinders 1 koaxial ein Dummy-Zylinder angesetzt ist, dessen freies Ende mit einem Außenkonus versehen ist, der mit einem Innenkonus der Haltevorricvhtung 10 korrespondiert.

Mittels der Haltevorrichtung 12 ist der Hohlzylinder 1 bzw. der Dummy-Zylinder 10um die Ziehachse 2 rotierbar. Gleichermaßen sind die Abzugsschlitten 8a, 8b und 8c um die Ziehachse 2 rotierbar.

Zur Messung des Außendurchmessers des abgezogenen Rohres 6 ist unterhalb des Ringofens 4 eine Durchmesser-Meßeinrichtung 13 vorgesehen.

Im folgenden wird ein Ausführungsbeispiel für das erfindungsgemäße Verfahren anhand der in Figur 1 dargestellten Vorrichtung näher erläutert.

Zur Durchführung des Verfahrens wird ein Quarzglas-Hohlzylinder 1 mit einem Außendurchmesser von 100 mm und mit einem Innendurchmesser von 30 mm koaxial zur Ziehachse 2 mittels der Haltevorrichtung 12 montiert. Der Hohlzylinder 1 wird in den Ringofen 4 mit einer Geschwindigkeit von 25 mm/min kontinuierlich abgesenkt. Der Ringofen 4 wird auf eine Temperatur von etwa 2200 °C geregelt, so daß der Hohlzylinder 1 erweicht und aus dem erweichten Bereich unter Bildung der Ziehzwiebel 5 kontinuierlich ein Rohr 6 mit einem Außendurchmesser von 50 mm und einem Innendurchmesser von 15 mm abgezogen wird. Für die Regelung auf einen konstanten Außendurchmesser wird dieser mittels des Durchmesser-Meßgerätes 13 kontinuierlich gemessen und die Meßwerte in eine Regelung eingespeist. Stellgröße für die Regelung ist die Ziehgeschwindigkeit, die etwa 100 mm/min beträgt. Sowohl der Hohlzylinder 1 als auch die Abzugsschlitten 8a, 8b, 8c rotieren während des Abziehens des Rohres 6 mit einer Geschwindigkeit von 10 U/min um die Ziehachse 2.

Vor dem Anziehen des Rohres 6 sind alle Abzugsschlitten 8a, 8b, und 8c im oberen Bereich der Laufschienen 3 angeordnet und die Spannfutter 9 sind geöffnet. Nach dem Einfädeln eines Strangs der erweichten Quarzglasmasse durch die Spannfutter 9 der drei Abzugsschlitten 8a, 8b, und 8c wird dieser zunächst im unteren Abzugsschlitten 8c eingespannt und mit einer vorberechneten Ziehgeschwindigkeit nach unten abgezogen. Dabei wird eine erste Kontaktstelle auf der Rohr-Oberfläche durch das Einspannen im unteren Abzugsschlitten 8c erzeugt. Danach wird das Rohr 6 auch vom mittleren Abzugsschlitten 8b erfaßt, der in einem Greifabstand "G" von 2 m zur ersten Kontaktstelle am Rohr 6 angreift und dann von seiner Startposition beginnend, das Rohr 6 synchron mit dem unteren Abzugsschlitten 8c nach unten abzieht. Dabei wird das abzuziehende Rohr 6 mittels zwei der Abzugsschlitten 8b, 8c geführt, wodurch eine starre Führung des Rohres 6 in Richtung der Ziehachse 2 vorgegeben wird. Durch das Einspannen im mittleren Abzugsschlitten 8b wird eine weitere Kontaktstelle auf der Rohr-Oberfläche erzeugt, die von der ersten Kontaktstelle um den Greifabstand "G" von 2 m entfernt ist. Nach Abzug einer weiteren Teillänge entsprechend einer dem Greifabstand "G" entsprechenden Länge von 2 m greift auch der obere Abzugsschlitten 8a am Rohr 6 an und beginnt unter Bildung einer dritten Kontaktstelle mit dem Abziehen, wobei seine Abzugsgeschwindigkeit zu der Abzugsgeschwindigkeit der beiden anderen Abzugsschlitten 8b, 8c mittels der gemeinsamen Regelung synchronisiert wird. Somit greifen alle drei Abzugsschlitten 8a, 8b, 8c in einem konstanten Greifabstand "G" von 2 m am Rohr 6 an.

Nun beginnt eine Phase des Ziehprozesses, während der die Abzugsschlitten 8a, 8b, 8c innerhalb ihres jeweiligen Arbeitsbereiches A, B, C reziprok aufwärts und abwärts verfahren werden, wobei das Rohr 6 bei der Abwärtsbewegung jeweils im Abzugschlitten 8a, 8b, 8c eingespannt wird und bei der Aufwärtsbewegung das jeweilige Spannfutter 9 offen ist. Die Geschwindigkeit der Aufwärtsbewegung ist unabhängig von derjenigen der Abwärtsbewegung (Ziehgeschwindigkeit). Im Ausführungsbeispiele liegt sie etwa beim Vierfachen der Ziehgeschwindigkeit, sie kann aber auch deutlich schneller sein. In Figur 1 sind die Abzugsschlitten 8a, 8b, 8c in ihrer oberen Position des jeweiligen Arbeitsbereiches A, B, C mit durchgezogenen Linien, und in ihrer unteren Position mit gestrichelten Linien dargestellt.

Der Arbeitsbereich A des oberen Abzugsschlittens 8a erstreckt sich von seiner Startposition bis 2 m in Ziehrichtung 7. Der Arbeitsbereich B für den mittleren Abzugsschlitten 8b liegt zwischen 2,2 m und 4 m, und der Arbeitsbereich C für den unteren Abzugsschlitten 8c liegt zwischen 4,5 m und 6,0 m. Sobald das untere Ende eines der jeweiligen Arbeitsbereiches A, B, C erreicht ist, wird der entsprechende Abzugsschlitten an die Ausgangsposition seines jeweiligen Arbeitsbereiches A, B, C zurückgefahren und wartet dort so lange, bis zur benachbarten Kontaktstelle exakt der Greifabstand "G" von 2 m erreicht ist. Damit stets eine ausreichende Führung des Rohres 6 durch mindestens zwei der Abzugsschlitten 8a, 8b, 8c gewährleistet ist, greift der "wartende" Abzugsschlitten zu dem Zeitpunkt (oder kurz vorher) am Rohr 6 an, an dem der andere Abzugsschlitten 8a, 8b, 8c das Rohr 6 freigibt, um an seine Ausgangsposition zurückverfahren zu werden. Durch diese Verfahrensweise wird außerdem gewährleistet, daß die Abzugsschlitten 8a, 8b , 8c den vorgegebenen Greifabstand "G" von 2 m einhalten, so daß sich eine durch die Abzugsschlitten 8b oder 8c erzeugte Kontaktstelle stets millimetergenau auf einer durch den vorangegangenen Abzugsschlitten 8a bzw. 8b erzeugten Kontaktstelle abbildet, so daß zwischen den jeweiligen Kontaktstellen berührungsfreie Rohrabschnitte von 2 m Länge erhalten werden.

Im konkreten Ausführungsbeispiel wird der obere Abzugsschlitten 8a nach einer weiteren Abzugslänge von etwa 1 m an die Ausgangsposition seines Arbeitsbereiches zurückgefahren. Nach einer weiteren Abzugslänge von etwa 1 m greift der obere Abzugsschlitten 8a wieder am Rohr 6 an und zieht in Ziehrichtung 7 an. Sobald sich das Spannfutter 9 des mittleren Abzugsschlittens 8b öffnet, wird dieser an die Startposition des Arbeitsbereiches B zurückgefahren. Während dieser Bewegungsphase wird das Rohr 6 durch den oberen Abzugsschlitten 8a und den unteren Abzugsschlitten 8c geführt und abgezogen.

Nach einer weiteren Abzugslänge von etwa 0,5 m greift der mittlere Abzugsschlitten 8b wieder am Rohr 6 an und zieht in Ziehrichtung 7 an, gleichzeitig öffnet sich das Spannfutter 9 des unteren Abzugsschlittens 8c, der dann an die Startposition des Arbeitsbereiches C zurückgefahren wird. Während dieser Bewegungsphase wird das Rohr 6 durch den oberen Abzugsschlitten 8a und den mittleren Abzugsschlitten 8b geführt und abgezogen.

Die beschriebenen Bewegungsphasen werden mehrmals nacheinander ausgeführt. Dabei kann das abgezogene Rohr 6 von Zeit zu Zeit auf das gewünschte Maß abgelängt werden.

Die durch die Spannfutter 9 der jeweiligen Abzugsschlitten 8a, 8b, 8c erzeugten Angriffspunkte (Kontaktstellen) liegen jeweils mit einem Greifabstand "G" von 2 m exakt überemander. Die Oberfläche des Rohres 6 wird durch das Abziehen innerhalb des Greifabstandes "G" daher nicht beeinträchtigt.

## Patentansprüche

1. Verfahren für die Herstellung eines zylinderförmigen Bauteils aus Quarzglas durch Abziehen eines Zylinders (6) aus einer erweichten Quarzglasmasse (5) in vorgegebener Abzugsrichtung (7) entlang einer Ziehachse (2) mittels eines am Zylinder (6) angreifenden Abzuges, **dadurch gekennzeichnet, daß** der Abzug wenigstens drei, entlang der Ziehachse (2) hintereinander angeordnete und in Abzugsrichtung (7) und in Gegenrichtung unabhängig voneinander bewegbare Führungselemente (8a; 8b; 8c) umfaßt, von denen mindestens zwei einen Greifabstand (G) voneinander haltende Führungselemente am Zylinder (6) gleichzeitig reibschlüssig angreifend mit gleicher Ziehgeschwindigkeit in Abzugsrichtung (7) bewegt werden.

2. Verfahren nach Anspruch 1, **dadurch gekennzeichnet, daß** benachbarte Führungselemente (8a; 8b; 8c) mit einem Greifabstand (G) von mindestens 1 m voneinander am Zylinder (6) angreifen.

3. Verfahren nach Anspruch 1 oder 2, **dadurch gekennzeichnet, daß** der Greifabstand (G) benachbarter Führungselemente (8a; 8b; 8c) auf gleiche Länge oder auf ganzzahlige Vielfache einer vorgegebenen Mindestlänge eingestellt wird.

4. Verfahren nach einem der vorhergehenden Ansprüche, **dadurch gekennzeichnet, daß** die Bewegung der Führungselemente (8a; 8b; 8c) in Gegenrichtung mit mindestens zweifacher Ziehgeschwindigkeit erfolgt.

5. Verfahren nach einem der vorhergehenden Ansprüche, **dadurch gekennzeichnet, daß** den Führungselementen (8a; 8b; 8c) jeweils ein Arbeitsbereich (A; B; C) zugeordnet ist, der einem individuellen Längenabschnitt entlang der Ziehachse (2) entspricht, wobei die Führungselemente (8a; 8b; 8c) innerhalb ihres jeweiligen Arbeitsbereiches (A; B; C) in Abzugsrichtung (7) und in der Gegenrichtung dazu bewegt werden.

6. Verfahren nach den Ansprüchen 4 und 5, **dadurch gekennzeichnet, daß** die Arbeitsbereiche (A; B; C) um eine Wegstrecke kürzer sind als der Greifabstand (G) wobei das Verhältnis von Wegstrecke und jeweiligem Arbeitsbereich (A; B; C) mindestens so groß ist wie das Verhältnis von Ziehgeschwindigkeit und der Geschwindigkeit bei der Bewegung in Gegenrichtung.

7. Verfahren nach einem der vorhergehenden Ansprüche, **dadurch gekennzeichnet, daß** die Führungselemente (8a; 8b; 8c) jeweils axialsymmetrisch zur Ziehachse (2) an der Zylindermantelfläche des Zylinders (6) angreifen.

8. Verfahren nach einem der vorhergehenden Ansprüche, **dadurch gekennzeichnet, daß** die erweichte Quarzglasmasse, der Zylinder (6) und die am Zylinder (6) angreifenden Führungselemente (8a; 8b; 8c) um die Ziehachse (2) mit gleicher Rotationsgeschwindigkeit rotieren.

9. Verfahren nach einem der vorhergehenden Ansprüche, **dadurch gekennzeichnet, daß** ein Abzug mit mindestens drei Führungselementen (8a; 8b; 8c) eingesetzt wird.

10. Vorrichtung für die Herstellung eines zylinderförmigen Bauteils aus Quarzglas durch Ziehen eines Zylinders (6) aus einer erweichten Quarzglasmasse (5), mit einer Zuführvorrichtung (12), einer Heizzone (4) und einem Abzug, wobei mittels der Zuführvorrichtung (12) ein Quarzglas-Rohmaterial (1) der Heizzone (4) zugeführt, das Quarzglas-Rohmaterial (1) in der Heizzone (4) unter Bildung der Quarzglasmasse (5) erweicht, und aus der erweichten Quarzglasmasse (5) mittels des Abzuges der Zylinder (6) entlang einer Ziehachse (2) und in einer vorgegebenen Abzugsrichtung (7) mit geregelter Ziehgeschwindigkeit gezogen wird, **dadurch gekennzeichnet, daß** der Abzug wenigstens drei, entlang der Ziehachse (2) hintereinander angeordnete Führungselemente (8a; 8b; 8c) umfaßt, die in Abzugsrichtung (7) und in der Gegenrichtung dazu unabhängig voneinander bewegbar sind.

11. Vorrichtung nach Anspruch 10, **dadurch gekennzeichnet, daß** den Führungselementen (8a; 8b; 8c) jeweils ein Arbeitsbereich (A; B; C) zugeordnet ist, der einem individuellen Längenabschnitt entlang der Ziehachse (2) entspricht, wobei die Führungselemente (8a; 8b; 8c) innerhalb ihres jeweiligen Arbeitsbereiches (A; B; C) in Abzugsrichtung (7) und in der Gegenrichtung dazu unabhängig voneinander bewegbar sind.

12. Vorrichtung nach Anspruch 10 oder 11, **dadurch gekennzeichnet, daß** die Führungselemente (8a; 8b; 8c) jeweils axialsymmetrisch zur Ziehachse (2) an der Zylindermantelfläche des zu ziehenden Zylinders (6) angreifen.

13. Vorrichtung nach einem der vorhergehenden Vorrichtungsansprüche, **dadurch gekennzeichnet, daß** die Führungselemente (8a; 8b; 8c) mit mindestens drei, um den Umfang des zu ziehenden Zylinders (6) gleichmäßig verteilten Spannbacken (9) versehen sind.

14. Vorrichtung nach einem der vorhergehenden Vorrichtungsansprüche, **dadurch gekennzeichnet, daß** eine Rotationseinrichtung vorgesehen ist, mittels der die erweichte Quarzglasmasse (1), der Zylinder (6) und die Führungselemente (8a; 8b; 8c) um die Ziehachse (2) rotierbar sind.

15. Vorrichtung nach einem der vorhergehenden Vorrichtungsansprüche, **dadurch gekennzeichnet, daß** der Abzug mindestens drei Führungselemente (8a; 8b; 8c) aufweist.

16. Vorrichtung nach einem der Vorrichtungsansprüche 10 bis 14, **dadurch gekennzeichnet, daß** der Abzug vier Führungselemente aufweist, die paarweise in Abzugsrichtung und in der Gegenrichtung dazu unabhängig voneinander bewegbar sind.

17. Vorrichtung nach einem der vorhergehenden Vorrichtungsansprüche, **dadurch gekennzeichnet, daß** der Abzug mindestens eine parallel zur Ziehachse (2) verlaufende, gemeinsame Führungschiene (3) für die Führungselemente (8a; 8b; 8c) aufweist.

18. Vorrichtung nach einem der vorhergehenden Vorrichtungsansprüche, **dadurch gekennzeichnet, daß** jedes Führungselement (8a; 8b; 8c) mit einem eigenen Antrieb versehen ist, wobei die Antriebe untereinander synchronisierbar sind.

## Claims

1. A method for producing a cylindrical component comprised of silica glass by drawing off a cylinder (6) from a softened silica glass mass (5) in a predetermined draw-off direction (7) along a drawing axis (2) by means of a draw-off device acting on said cylinder (6), **characterized in that** said draw-off device comprises at least three guide elements (8a; 8b; 8c) which are arranged one after the other along said drawing axis (2) and are movable independently of one another in draw-off direction (7) and in opposite direction, and of which at least two guide elements spaced apart from each other at a grip distance (G) are moved at the same drawing speed in draw-off direction (7), frictionally acting on said cylinder (6) at the same time.

2. The method according to claim 1, **characterized in that** neighboring guide elements (8a; 8b; 8c) act on said cylinder (6) at a grip distance (G) of at least 1 m.

3. The method according to claim 1 or 2, **characterized in that** said grip distance (G) of neighboring guide elements (8a; 8b; 8c) is set to the same length or to integer multiples of a predetermined minimum length.

4. The method according to any one of the preceding claims, **characterized in that** said guide elements (8a; 8b; 8c) are moved in opposite direction with at least two times the drawing speed.

5. The method according to any one of the preceding claims, **characterized in that** each of said guide elements (8a; 8b; 8c) has assigned thereto a working area (A, B; C) corresponding to an individual longitudinal section along said drawing axis (2), said guide elements (8a; 8b; 8c) being moved within their respective working area (A, B; C) in draw-off direction (7) and in the opposite direction thereto.

6. The method according to claims 4 and 5, **characterized in that** said working areas (A; B; C) are shorter by a distance than said grip distance (G), the ratio of distance and corresponding working area (A; B; C) being at least as great as the ratio of drawing speed and the speed during movement in opposite direction.

7. The method according to any one of the preceding claims, **characterized in that** each of said guide elements (8a; 8b; 8c) acts in axial symmetry with said drawing axis (2) on the outer cylinder surface of said cylinder (6).

8. The method according to any one of the preceding claims, **characterized in that** said softened silica glass mass, said cylinder (6) and said guide elements (8a; 8b; 8c) acting on said cylinder (6) rotate about said drawing axis (2) at the same rotational speed.

9. The method according to any one of the preceding claims, **characterized in that** a draw-off device with at least three guide elements (8a; 8b; 8c) is used.

10. A device for producing a cylindrical component comprised of silica glass by drawing a cylinder (6) from a softened silica glass mass (5), comprising a supply device (12), a heating zone (4), and a draw-off device, a raw material (1) of silica glass being supplied by means of said supply device (12) to said heating zone (4), said raw material (1) of silica glass being softened in said heating zone (4) to form said silica glass mass (5), and said cylinder (6) being drawn out of said softened silica glass mass (5) by means of said draw-off device along a drawing axis (2) and in a predetermined draw-off direction (7) at a controlled drawing speed, **characterized in that** said draw-off device comprises at least three guide elements (8a; 8b; 8c) which are arranged one after the other along said drawing axis (2) and are movable in draw-off direction (7) and in the opposite direction thereto independently of one another.

11. The device according to claim 10, **characterized in that** each of said guide elements (8a; 8b; 8c) has assigned thereto a working area (A; B; C) corresponding to an individual longitudinal section along said drawing axis (2), said guide elements (8a; 8b; 8c) being movable within their respective working area (A, B, C) in draw-off direction (7) and in the opposite direction thereto independently of each other.

12. The device according to claim 10 or 11, **characterized in that** each of said guide elements (8a; 8b; 8c) acts in axial symmetry with said drawing axis (2) on the outer cylinder surface of said cylinder (6) to be drawn.

13. The device according to any one of the preceding device claims, **characterized in that** said guide elements (8a; 8b; 8c) are provided with at least three clamping jaws (9) uniformly distributed around the circumference of said cylinder (6) to be drawn.

14. The device according to any one of the preceding device claims, **characterized in that** there is provided a rotation means by means of which said softened silica glass mass (1), said cylinder (6) and said guide elements (8a; 8b; 8c) are rotatable about said drawing axis (2).

15. The device according to any one of the preceding device claims, **characterized in that** said draw-off device comprises at least three guide elements (8a; 8b; 8c).

16. The device according to any one of the device claims 10 to 14, **characterized in that** said draw-off device comprises four guide elements that are movable in pairs in draw-off direction and in the opposite direction thereto independently of one another.

17. The device according to any one of the preceding device claims, **characterized in that** said draw-off device comprises at least one common guide rail (3) for said guide elements (8a; 8b; 8c), said guide rail (3) extending in parallel with said drawing axis (2).

18. The device according to any one of the preceding device claims, **characterized in that** each guide element (8a; 8b; 8c) is provided with a drive of its own, said drives being adapted to be synchronized with one another.

## Revendications

1. Procédé pour la fabrication d'un composant de forme cylindrique en verre de quartz en tirant un cylindre (6) d'une masse de quartz (5), ramollie, dans une direction de tirage (7), prédéterminée, le long d'un axe de tirage (2) à l'aide d'un moyen de traction appliqué au cylindre (6),
**caractérisé en ce que**
le moyen de traction comprend au moins trois éléments de guidage (8a ; 8b ; 8c) mobiles indépendamment les uns des autres dans la direction de tirage (7) et dans la direction opposée, placés les uns derrière les autres suivant l'axe de tirage (2), et au moins deux des éléments de guidage écartés d'une distance de préhension (G) agissent simultanément par une liaison par friction sur le cylindre (6) en se déplaçant à la même vitesse de tirage dans la direction de tirage (7).

2. Procédé selon la revendication 1,
**caractérisé en ce que**
les éléments de guidage voisins (8a ; 8b ; 8c) agissent avec une distance de préhension (G) d'au moins 1 mètre les uns des autres sur le cylindre (6).

3. Procédé selon l'une quelconque des revendications 1 ou 2,
**caractérisé en ce que**
la distance de préhension (G) d'éléments de guidage voisins (8a ; 8b ; 8c) est réglée sur la même longueur ou sur un multiple entier d'une longueur minimale prédéterminée.

4. Procédé selon l'une quelconque des revendications précédentes,
**caractérisé en ce que**
le mouvement des éléments de guidage (8a ; 8b ; 8c) dans la direction opposée se fait au moins à une vitesse double de la vitesse de tirage.

5. Procédé selon l'une quelconque des revendications précédentes,
**caractérisé en ce qu'**
une plage de travail (A ; B ; C) est associée aux éléments de guidage (8a ; 8b ; 8c), qui correspond à un segment de longueur individuelle le long de l'axe de tirage (2), les éléments de guidage (8a ; 8b ; 8c) se déplaçant dans leur zone de travail respective (A ; B ; C) dans la direction d'étirage (7) ou dans la direction opposée.

6. Procédé selon l'une quelconque des revendications 4 et 5,
**caractérisé en ce que**
les plages de travail (A ; B ; C) sont plus courtes d'un trajet, que la distance de préhension (G),
le rapport entre le trajet et la plage de travail respective (A ; B ; C) étant au moins égal au rapport entre la vitesse de tirage et la vitesse de déplacement dans la direction opposée.

7. Procédé selon l'une quelconque des revendications précédentes,
**caractérisé en ce que**
les éléments de guidage (8a ; 8b ; 8c) attaquent la surface enveloppe cylindrique du cylindre (6) suivant une symétrie axiale par rapport à l'axe de tirage (2).

8. Procédé selon l'une quelconque des revendications précédentes,
**caractérisé en ce que**
la masse de verre de quartz ramollie, le cylindre (6) et les éléments de guidage (8a ; 8b ; 8c) attaquant le cylindre (6) tournent à la même vitesse de rotation autour de l'axe de tirage (2).

9. Procédé selon l'une quelconque des revendications précédentes,
**caractérisé par**
un tirage avec au moins trois éléments de guidage (8a ; 8b ; 8c).

10. Dispositif pour la fabrication d'un composant cylindrique en verre de quartz par tirage d'un cylindre (6) d'une masse de verre de quartz (5), ramollie, comportant un dispositif d'alimentation (12), une zone de chauffage (4) et un moyen de tirage,
le dispositif d'alimentation (12) fournissant de la matière brute de verre de quartz (1) à la zone de chauffage (4), la matière brute de verre de quartz (1) se ramollissant dans la zone de chauffage (4) en formant la masse de verre de quartz (5) et à partir de la masse de verre de quartz (5) ramollie, par le tirage du cylindre (6) de long de l'axe de tirage (2) et dans une direction de tirage prédéterminée (7), on tire à une vitesse de tirage réglée,
**caractérisé en ce que**
le moyen de tirage comprend au moins trois éléments de guidage (8a ; 8b ; 8c) placés l'un derrière l'autre suivant l'axe de tirage (2), ces moyens pouvant être déplacés dans la direction de tirage (7) et dans la direction opposée, indépendamment les uns des autres.

11. Dispositif selon la revendication 10,
**caractérisé en ce qu'**
une plage de travail (A ; B ; C) est associée aux éléments de guidage (8a ; 8b ; 8c), cette plage correspondant à un segment de longueur individuelle suivant l'axe de tirage (2),
les éléments de guidage (8a ; 8b ; 8c) étant mobiles indépendamment les uns des autres dans leur plage de travail respective (A ; B ; C) dans la direction de tirage (7) et dans la direction opposée.

12. Dispositif selon l'une quelconque des revendications 10 ou 11,
**caractérisé en ce que**
les éléments de guidage (8a ; 8b ; 8c) attaquent chaque fois de manière symétrique selon l'axe de tirage (2) la surface de l'enveloppe cylindrique du cylindre (6) à tirer.

13. Dispositif selon l'une quelconque des revendications précédentes de dispositif,
**caractérisé en ce que**
les éléments de guidage (8a ; 8b ; 8c) comportent au moins trois mors de serrage (9) répartis régulièrement à la périphérie du cylindre (6) à tirer.

14. Dispositif selon l'une quelconque des revendications précédentes de dispositif,
**caractérisé par**
une installation de rotation à l'aide de laquelle la masse de verre de quartz (1), ramollie, le cylindre (6) et les éléments de guidage (8a ; 8b ; 8c) sont entraînés en rotation autour de l'axe de tirage (2).

15. Dispositif selon l'une quelconque des revendications précédentes de dispositif,
**caractérisé en ce que**
le moyen de tirage comporte au moins trois éléments de guidage (8a ; 8b ; 8c).

16. Dispositif selon l'une quelconque des revendications de dispositif 10-14,
**caractérisé en ce que**
le moyen de tirage comporte quatre éléments de guidage mobiles par paires dans la direction de tirage et dans la direction opposée, indépendamment les uns des autres.

17. Dispositif selon l'une quelconque des revendications de dispositif,
**caractérisé en ce que**
le moyen de tirage comporte au moins un rail de guidage (3) commun parallèle à l'axe de tirage (2) pour les éléments de guidage (8a ; 8b ; 8c).

18. Dispositif selon l'une quelconque des revendications précédentes de dispositif,
**caractérisé en ce que**
chaque élément de guidage (8a ; 8b ; 8c) comporte un moyen d'entraînement propre et les moyens d'entraînement peuvent être synchronisés entre eux.
